# FASCICULE DE BREVET EUROPEEN

(11) **EP 4 124 791 B1**
(45) Date de publication et mention de la délivrance du brevet: **26.03.2025**
(21) Numéro de dépôt: 22184491.3
(22) Date de dépôt: 12.07.2022
(51) Int. Cl.: F17C 3/10

(54) **CUVE, EN PARTICULIER POUR UN RÉSERVOIR A HYDROGÈNE LIQUIDE, POURVUE D'AU MOINS UN DÔME FIXE PAR UNE SOUDURE EXTERNE**
BEHÄLTER, INSBESONDERE FÜR EINEN FLÜSSIGWASSERSTOFFTANK, DER MIT MINDESTENS EINER KUPPEL VERSEHEN IST, DIE DURCH EINE ÄUSSERE SCHWEISSNAHT BEFESTIGT IST
VAT, IN PARTICULAR FOR A TANK WITH LIQUID HYDROGEN, PROVIDED WITH AT LEAST ONE DOME FIXED BY EXTERNAL WELDING

(30) Priorité: 29.07.2021 FR 2108275
(43) Date de publication de la demande: 01.02.2023
(73) Titulaire: AIRBUS OPERATIONS (SAS), 31060 Toulouse (FR)
(72) Inventeur: GUILLOTEAU, Damien, 31060 Toulouse (FR)
(74) Mandataire: Gevers & Orès

(56) Documents cités:
- EP-B1- 0 575 395
- GB-A- 751 049
- JP-A- 2010 111 036
- JP-A- 2010 112 413
- US-A1- 2012 006 820
- US-A1- 2012 255 155
- US-A1- 2020 088 351

## Description

### DOMAINE TECHNIQUE

La présente invention concerne un procédé de maintenance d'une cuve, en particulier pour un réservoir à hydrogène liquide, pourvue d'au moins un dôme.

### ETAT DE LA TECHNIQUE

L'hydrogène étant un combustible écologique n'émettant pas de gaz à effet de serre, il est envisagé de développer son utilisation et de l'utiliser à l'avenir dans des domaines très variés et notamment sur des aéronefs, en particulier sur des avions de transport.

Le stockage de l'hydrogène comporte un certain nombre de contraintes rendant la conception d'un réservoir complexe. En effet, l'hydrogène à température et pression ambiantes se présente sous forme gazeuse. Cet état gazeux n'est pas idéal pour le stockage puisque, l'hydrogène étant peu dense, il implique de prévoir un très grand volume de réservoir pour pouvoir contenir une quantité importante d'hydrogène. Par ailleurs, l'hydrogène étant un composant de nature très volatile, son stockage doit être réalisé dans un réservoir complètement étanche.

Une solution pour remédier à ce problème consiste à stocker l'hydrogène à l'état liquide, en le maintenant à très basse température (environ -252°C), dans un conteneur hermétiquement clos. Pour ce faire, de façon usuelle, on utilise un réservoir fermé, entièrement soudé et comportant des systèmes de réfrigération. Un tel réservoir comprend, généralement, notamment une cuve interne comportant une virole avec un dôme bombé soudé par une soudure bout-à-bout, à chaque extrémité de la virole.

Toutefois, un réservoir à très basse température nécessite une cuve équipée de structures et de systèmes complexes limitant l'accès à ladite cuve. Or, comme les cuves d'un tel réservoir sont généralement fabriquées en soudant un dôme bombé à chaque extrémité d'une virole, il est nécessaire d'avoir accès à ces parties, d'une part autour de la cuve pour passer des outils de soudage et d'autre part à l'intérieur de la cuve pour passer des outils de maintien en position.

Par ailleurs, on connaît par les documents US 2012/255155 A1, US 2012/006820 A1, US 2020/088351 A1, EP 0 575 395 B1 et GB 751 049 A des réservoirs métalliques entièrement soudés et destinés à stocker des liquides ou des gaz sensibles à la chaleur et/ou sous haute pression.

### EXPOSÉ DE L'INVENTION

La présente invention a pour objet de proposer une solution permettant de remédier à l'inconvénient précité.

Pour ce faire, elle concerne un procédé de maintenance d'une cuve selon la revendication 1.

De préférence, le procédé de maintenance comporte, de plus, une étape de remontage consistant à remettre en position le dôme sur le tronçon central de manière à reformer la languette saillante, ladite languette saillante présentant une longueur diminuée correspondant à sa longueur initiale moins la longueur de ladite partie découpée, et à souder entre eux le dôme et le tronçon central au niveau de l'extrémité saillante de ladite languette saillante en réalisant un cordon de soudure présentant une profondeur inférieure à la longueur diminuée de la languette saillante.

### BRÈVE DESCRIPTION DES FIGURES

Les figures annexées feront bien comprendre comment l'invention peut être réalisée. Sur ces figures, des références identiques désignent des éléments semblables.
La figure 1 est une vue en perspective, en coupe partielle, d'un exemple de réservoir à hydrogène liquide comportant une cuve externe et une cuve interne.
La figure 2 est une vue partielle, en coupe, d'une zone d'interface entre un tronçon central et un dôme selon un premier mode réalisation d'une cuve.
La figure 3 est une vue partielle, en coupe, d'une zone d'interface entre un tronçon central et un dôme selon un second mode réalisation d'une cuve.
La figure 4 est une vue partielle, en coupe, d'une réalisation particulière du second mode de réalisation avec une zone d'interface coudée entre le tronçon central et le dôme.
La figure 5A est une vue partielle, en coupe, similaire à celle de la figure 2, d'une zone d'interface entre un tronçon central et un dôme d'une cuve pourvue d'une languette saillante soudée.
La figure 5B est une vue similaire à celle de la figure 5A lors d'une opération d'ouverture de la cuve après une découpe de la partie soudée de la languette saillante.
La figure 5C est une vue similaire à celle de la figure 5B lors de l'opération d'ouverture de la cuve après un désassemblage du tronçon central et du dôme.
La figure 5D est une vue similaire à celle de la figure 5C, après un réassemblage du tronçon central et du dôme et une nouvelle soudure de la languette saillante.
La figure 6 montre schématiquement les étapes d'un procédé de fabrication d'une cuve.
La figure 7 montre schématiquement les étapes d'un procédé de maintenance d'une cuve.

### DESCRIPTION DÉTAILLÉE

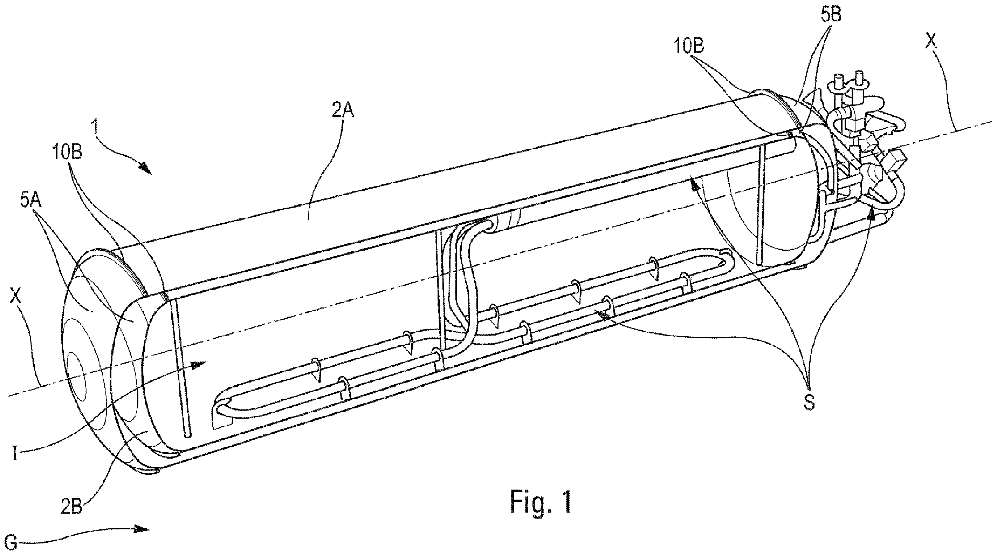

Le réservoir 1, permettant d'illustrer l'invention et représenté schématiquement dans un mode de réalisation particulier sur la figure 1, est un réservoir pour hydrogène liquide. Dans l'exemple de la figure 1, le réservoir 1, d'axe longitudinal X-X, comporte deux cuves 2A et 2B, à savoir une cuve externe 2A et une cuve interne 2B qui est agencée dans la cuve externe 2A. Le réservoir 1 peut comporter également un ensemble de systèmes S usuels. Ces systèmes S sont agencés au moins en partie à l'intérieur de la cuve interne 2B et comprennent des tuyaux, des capteurs, un doigt réfrigérant, ..., et en particulier tous les éléments usuels nécessaires pour générer les basses températures requises pour le stockage de l'hydrogène liquide.

Bien que non exclusivement, un réservoir pour hydrogène liquide tel que le réservoir 1 est particulièrement bien adapté pour équiper un engin mobile fonctionnant, au moins partiellement, à l'hydrogène. De manière préférée, le réservoir 1 est destiné à équiper un aéronef, en particulier un avion de transport.

Dans la description suivante, on décrit une cuve 2 du réservoir 1. Cette cuve 2 peut correspondre à la cuve interne 2A ou à la cuve externe 2B.

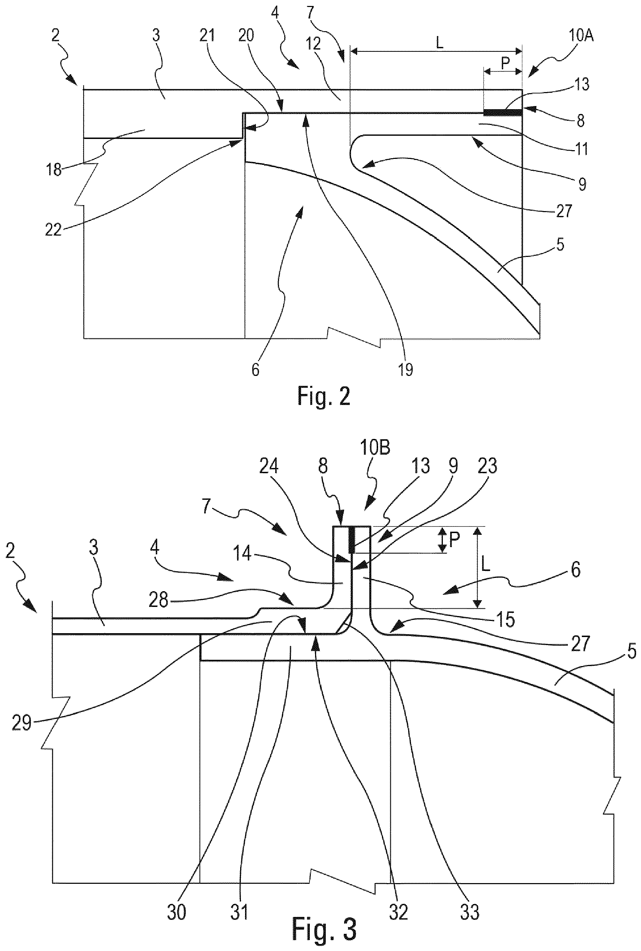

Comme représenté sur les figures 2 à 4, illustrant des modes de réalisation différents, la cuve 2 comporte un tronçon central 3 de forme cylindrique, représentant une virole, d'axe longitudinal X-X, qui est pourvu d'au moins une extrémité 4 dite libre.

Dans le cadre de la présente invention, la cuve peut comprendre un tronçon central présentant des formes autres qu'une forme cylindrique, par exemple une forme conique. La forme de la cuve peut, notamment, être adaptée à l'espace disponible pour l'agencement du réservoir à hydrogène liquide, en particulier lorsque ce dernier est destiné à équiper un engin mobile, par exemple un aéronef.

De plus, la cuve 2 comporte un dôme 5 apte à être monté sur l'extrémité libre 4 du tronçon central 3 par l'intermédiaire d'une extrémité 6 dite ouverte. Le dôme 5 est un élément creux présentant une enveloppe ouverte à une extrémité longitudinale, à savoir une extrémité dite ouverte 6, et borgne à l'autre extrémité longitudinale (non représentée). De préférence, le dôme 5 est fermé à son extrémité borgne par un fond bombé. En outre, le tronçon central 3 et le dôme 5 sont aptes et destinés à être assemblés ensemble pour former la cuve 2, l'extrémité ouverte 6 dudit dôme 5 étant agencée sur l'extrémité libre 4 du tronçon central 3.

Dans un mode de réalisation particulier, précisé ci-dessous, les deux extrémités libres 4 du tronçon central 3 sont pourvues, chacune, d'un dôme 5.

Dans la description suivante :
- les termes « interne » et « intérieur » s'appliquent à l'espace entouré et délimité par les parois de la cuve 2, à savoir la paroi du tronçon central 3 et celle du ou des dômes 5, comme illustré par une flèche I sur la figure 1 ; et
- les termes « externe » et « extérieur » s'appliquent à ce qui est hors de cet espace entouré par les parois de la cuve 2, comme illustré par une flèche G sur la figure 1.

Comme représenté sur les figures 2 à 4, l'extrémité libre 4 du tronçon central 3 comprend un élément de liaison 7 et l'extrémité ouverte 6 du dôme 5 comprend un élément de liaison 9. Les éléments de liaison 7 et 9 sont configurés pour former, lorsque le dôme 5 est agencé sur le tronçon central 3, une languette saillante 10A, 10B, 10C située à l'extérieur de la cuve 2.

De plus, la languette saillante 10A, 10B, 10C est apte à être soudée à une extrémité dite saillante 8 qui correspond à l'extrémité libre de ladite languette saillante 10A, 10B, 10C. La soudure de la languette saillante 10A, 10B, 10C, précisée ci-dessous, représente le lien de fixation entre les éléments de liaison 7 et 9, et plus généralement le lien de fixation entre le tronçon central 3 et le dôme 5.

De manière préférée, la soudure de la languette saillante 10A, 10B, 10C, est le seul lien de fixation permettant de maintenir assemblés ensemble le tronçon central 3 et le dôme 5. Cependant, dans des modes de réalisation particuliers, le tronçon central 3 et le dôme 5 peuvent présenter des systèmes de fixation supplémentaires, lesdits systèmes étant complémentaires à ladite soudure. Par exemple, il est possible de prévoir un système de fixation amovible destiné à être agencé sur le tronçon central 3 et le dôme 5, en plus de ladite soudure, et apte à participer à la fixation entre ledit tronçon central 3 et ledit dôme 5.

Ainsi, on dispose d'une cuve 2 dont la soudure entre le tronçon central 3 et le dôme 5, à savoir la soudure réalisée sur la languette saillante 10A, 10B, 10C, est située à l'extérieur de la cuve 2 lorsque celle-ci est assemblée, ce qui présente de nombreux avantages précisés ci-dessous.

La cuve 2 (à savoir notamment le corps central 3 et le dôme 5) peut être réalisée en différents matériaux. En particulier, elle peut être réalisée en acier, en matériau composite ou en aluminium. De préférence, la cuve 2 est réalisée en aluminium qui présente l'avantage d'être un matériau léger, résistant et peu coûteux. De plus, les caractéristiques mécaniques de l'aluminium ne sont pas dégradées à très basse température.

Dans le cadre de la présente invention, la languette saillante 10A, 10B, 10C peut être réalisée de différentes manières.

Dans un premier mode de réalisation, représenté sur la figure 2, l'élément de liaison 7 correspond à un prolongement 12 du tronçon central 3. Ce prolongement 12 correspond au prolongement de la structure du tronçon central 3 selon l'axe longitudinal X-X, à l'extrémité libre 4. Dans ce premier mode de réalisation, le tronçon central 3 étant cylindrique, le prolongement 12 correspond à un anneau à l'extrémité libre 4, présentant une face 19 interne cylindrique.

En outre, l'élément de liaison 9 correspond à une collerette longitudinale 11, de forme cylindrique, agencée sur la face externe 27 de la paroi du dôme 5, à l'extrémité ouverte 6. Dans ce mode de réalisation, la collerette longitudinale 11 présente une symétrie de révolution, d'axe X-X, et correspond à un tronçon tubulaire s'étendant depuis l'extrémité ouverte 6 du dôme 5 vers l'extrémité borgne (extrémité opposée). La collerette longitudinale 11 présente, à l'extrémité ouverte 6, une face radiale 22 orthogonale à l'axe longitudinal X-X.

Le prolongement 12 et la collerette longitudinale 11 présentent des formes coopérantes.

Dans le cadre de la présente invention, on entend par formes coopérantes différents types de formes identiques, comme précisé ci-dessous, permettant un contact entre deux faces des éléments considérés.

Comme représenté sur la figure 2, le diamètre de la face 19 de la collerette longitudinale 11 (cylindrique) est légèrement plus petit que le diamètre de la face 20 (vers l'extérieur) du prolongement 12 (cylindrique). Ainsi, la collerette longitudinale 11 est apte à être insérée dans le prolongement 12 avec un contact périphérique entre les faces 19 et 20. Lorsque la collerette longitudinale 11 est insérée dans le prolongement 12, ces deux éléments forment la languette saillante 10A. La languette saillante 10A correspond ainsi à un prolongement tubulaire (cylindrique), qui peut être soudé à l'extrémité saillante 8 comme précisé ci-dessous.

Par ailleurs, comme représenté sur la figure 2, le tronçon central 3 comprend, sur sa face interne 19, un épaulement 18. De plus, la face latérale 22 de l'extrémité ouverte 6 du dôme 5 est configurée pour venir en appui d'une face latérale 21 dudit l'épaulement 18 lorsque le tronçon central 3 et le dôme 5 sont assemblés. L'épaulement 18 permet de fournir une face d'appui (à savoir la face latérale 21) pour le dôme 5, ce qui permet de faciliter l'assemblage et le maintien en position du dôme 5 sur le tronçon central 3.

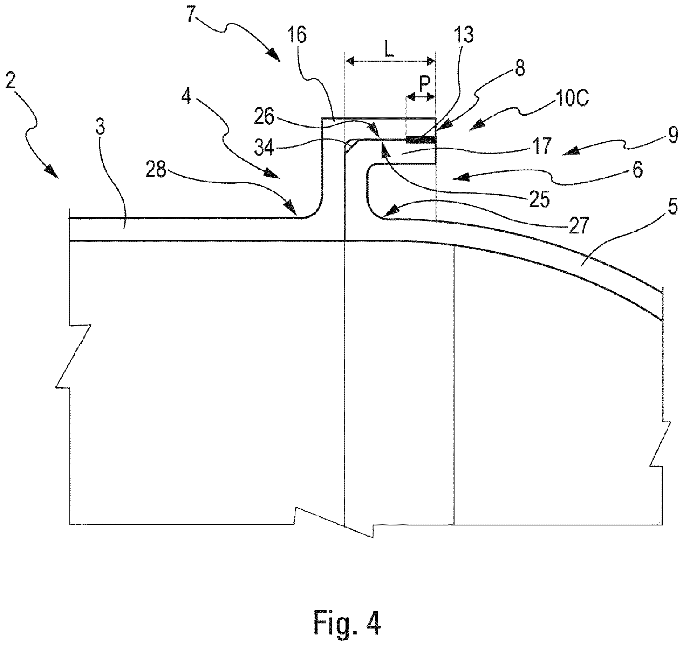

Par ailleurs, dans un second mode de réalisation, représenté selon deux réalisations différentes respectivement sur les figures 3 et 4, l'élément de liaison 7 correspond à une collerette 14, 16 agencée sur une face externe 28 du tronçon central 3, et l'élément de liaison 9 correspond à une collerette 15, 17 agencée sur la face externe 27 du dôme 5.

De plus, la collerette 14, 16 et la collerette 15, 17 présentent des formes coopérantes de sorte qu'une face 23, 25 de la collerette 14, 16 est apte à venir en appui d'une face 24, 26 associée de la collerette 15, 17. La collerette 14, 16 et la collerette 15, 17, ainsi liées par le contact entre ces faces associées, forment la languette saillante 10B, 10C.

Dans la réalisation de la figure 3, la collerette, 14 et la collerette 15 correspondent à des collerettes rectilignes, s'étendant radialement par rapport à l'axe X-X vers l'extérieur de la cuve 2. La face 23 de la collerette 14 et la face 24 de la collerette 15 sont configurées pour venir en appui l'une contre l'autre.

Dans cette réalisation, le dôme 5 présente à son extrémité ouverte 6 une extension cylindrique 31 s'étendant longitudinalement vers l'extérieur dudit dôme 5 selon l'axe X-X. De plus, l'élément de liaison 7 du tronçon central 3 présente à son extrémité libre 4 une face interne cylindrique 32 et l'extension cylindrique 31 présente une face externe cylindrique 30. L'extension cylindrique 31 et l'élément de liaison 7 présentent des formes coopérantes de sorte que ladite extension cylindrique 31 puisse être insérée dans le tronçon central 3 avec un contact périphérique entre les faces 30 et 32. L'extension cylindrique 31 permet de faciliter la mise en position et le maintien du dôme 5 sur le tronçon central 3 lorsqu'ils sont assemblés ensemble.

En outre, le tronçon central 3 présente, à son extrémité libre 4, une troncature 33 au niveau de l'angle formé par les faces 32 et 23. Cette troncature 33 peut correspondre, par exemple, à un chanfrein réalisé de façon usuelle, et permet de faciliter l'insertion du dôme 5 dans le tronçon central 3.

Par ailleurs, le tronçon central 3 présente, à son extrémité libre 4, un segment de paroi 29 épaissi, situé au niveau de la partie longitudinale dudit tronçon central 3 à la base de la collerette 14. Ce segment de paroi 29 correspond à une partie cylindrique longitudinale du tronçon central 3 présentant une épaisseur plus importante que le reste dudit tronçon central 3. Le segment de paroi 29 a notamment pour objectif de rigidifier le tronçon central 3 à la base de la collerette 14.

Dans une variante de réalisation (non représentée), la languette saillante peut être rectiligne, mais au lieu de s'étendre radialement par rapport à l'axe longitudinal X-X, donc de façon orthogonale à l'axe longitudinal X-X, elle peut s'étendre selon une direction présentant un angle différent de 90° par rapport à cet axe longitudinal X-X.

Dans une autre réalisation particulière du second mode de réalisation, représentée sur la figure 4, la languette saillante 10C, formée par la collerette 16 et la collerette 17, présente une forme coudée. Les collerettes 16 et 17 présentent toutes les deux une forme coudée, ces formes étant coopérantes de sorte que la face 25 de la collerette 16 et la face 26 de la collerette 17 sont aptes à venir en appui l'une contre l'autre. Les collerettes 16 et 17 ainsi assemblés forment ladite languette saillante 10C.

Dans l'exemple de la figure 4, le coude formé par la languette saillante 10C présente un angle sensiblement égal à 90°. Dans ce cas, un premier segment de la languette saillante 10C est perpendiculaire à l'axe longitudinal X-X de la cuve 2 et un second segment de la languette saillante 10C est parallèle audit axe longitudinal X-X.

En outre, la collerette 17 présente une troncature 34 au niveau de l'angle formé par les deux segments du coude. Cette troncature 34 est située sur la partie extérieure dudit coude et peut notamment correspondre à un chanfrein réalisé de façon usuelle. La troncature 34 permet de faciliter l'insertion de la collerette 17 dans la collerette 16 lorsque les faces extérieures du coude formé par la collerette 17 sont mises en appui sur les faces intérieures du coude formé par la collerette 16.Dans une variante de réalisation (non représentée), la languette saillante peut présenter une forme coudée comprenant un coude ayant un angle différent de 90°.

Dans le cadre de la présente invention, les éléments de liaison 7 et 9 peuvent être réalisés de différentes manières. De préférence, ils sont réalisés dans le même matériau que le tronçon central 3 et le dôme 5.

Dans un premier mode de réalisation particulier, l'élément de liaison 7 fait directement partie de la pièce formant le corps central 3 et est donc intégré dans le corps central 3. De même, l'élément de liaison 9 fait directement partie de la pièce formant le dôme 5 et est donc intégré dans le dôme 5.

En outre, dans un deuxième mode de réalisation particulier, ces éléments de liaison 7 et 9 sont des pièces individuelles rapportées. Dans ce cas, les éléments de liaison 7 et 9 sont fixés, de préférence soudées, respectivement, sur le tronçon central 3 et sur le dôme 5.

Il est également envisageable que l'un des éléments de liaison 7 et 9 soit un élément intégré et l'autre un élément rapporté.

Les éléments de liaison 7 et 9 sont soudés ensemble à l'extrémité saillante 8 de manière à former la soudure de la languette saillante 10A, 10B, 10C.

Cette soudure est réalisée à l'aide d'un cordon de soudure 13 représenté schématiquement par un trait épais sur les figures 2 à 4. Ce cordon de soudure 13 est formé à l'extrémité saillante 8 de la languette saillante 10A, 10B, 10C, au niveau de l'interface (c'est-à-dire des faces respectives en contact) entre les éléments de liaison 7 et 9 et représente la partie provenant de la fusion des parties soudées (ou d'un métal d'apport). Dans le cadre de la présente invention, on entend par profondeur P du cordon de soudure 13, la distance maximale de la partie fusionnée s'étendant vers l'intérieur de la matière dans la direction perpendiculaire à l'interface.

La soudure de la languette saillante 10A, 10B, 10C peut être réalisée par des procédés de soudage usuels, tels qu'un soudage de type MIG/MAG (pour « Metal Inert Gaz » et « Metal Active Gaz » en anglais), un soudage de type TIG (pour « Tungstène Inert Gaz » en anglais), ou un soudage par friction malaxage de type FSW (pour « Friction Stir Welding » en anglais).

De manière préférée, cette soudure est réalisée par soudage par friction malaxage qui est un procédé particulièrement adapté à l'aluminium, l'aluminium étant un matériau difficilement soudable.

Par ailleurs, dans un mode de réalisation préféré, la languette saillante 10A, 10B, 10C présente une longueur L qui est supérieure ou égale à deux fois la profondeur P (maximale) du cordon de soudure 13.

Ainsi, la languette saillante 10A, 10B, 10C présente une longueur L suffisamment importante pour permettre plusieurs réouvertures de la cuve 2.

En effet, il est possible de découper une partie de l'extrémité de la languette saillante 10 comportant le cordon de soudure 13, comme précisé ci-dessous, afin de supprimer la liaison maintenant le tronçon central 3 et le dôme 5 assemblés. Ainsi, le tronçon central 3 et le dôme 5 peuvent être désassemblés, et la cuve 2 ouverte, ce qui permet d'accéder à l'intérieur de ladite cuve 2. De plus, la découpe de la languette saillante 10A, 10B, 10C est effectuée entièrement à l'extérieur de la cuve 2, ce qui évite de polluer l'intérieur de la cuve 2, notamment avec des copeaux émis lors de ladite découpe. En outre, la cuve 2 peut ensuite être assemblée de nouveau. En effet, pour ouvrir la cuve 2, il suffit de découper l'extrémité de la languette saillante 10A, 10B, 10C sur une longueur sensiblement égale à la profondeur P du cordon de soudure 13. Or, la languette saillante 10A, 10B, 10C présente une longueur au moins deux fois supérieures à la profondeur P. Par conséquent, après ouverture de la cuve 2, il reste suffisamment de longueur à la languette saillantes 10A, 10B, 10C pour être soudée à nouveau par l'intermédiaire d'un cordon de soudure 13.

Dans un mode de réalisation préféré, la languette saillante 10A, 10B, 10C présente une longueur L inférieure ou égale à dix fois la profondeur P du cordon de soudure 13, de manière à ne pas être (inutilement) trop longue et à ne pas augmenter l'encombrement à l'extérieur de la cuve 2.

De préférence, la languette saillante 10 présente une longueur totale L comprise entre trois et cinq fois la profondeur P (maximale) du cordon de soudure 13. Ce multiple correspond à un nombre moyen estimé d'ouvertures nécessaires de la cuve 2 au cours de sa durée de vie et permet de disposer d'une languette saillante 10A, 10B, 10C de taille limitée.

Ainsi, la cuve 2 peut être ouverte plusieurs fois au cours de sa vie et ce de manière propre, sans dégrader l'intérieur de la cuve 2. De plus, la longueur totale de la cuve n'est pas diminuée après chaque ouverture de ladite cuve 2 puisque la découpe est effectuée non pas sur le corps même de la cuve mais sur la languette saillante 10A, 10B, 10C. Cela permet notamment d'accéder aux systèmes S situés à l'intérieur de la cuve 2, par exemple pour effectuer des opérations de maintenance ou de dépannage.

Dans une réalisation particulière, la cuve 2 comporte deux dômes 5A, 5B dont chacun est fixé, de la manière décrite ci-dessus, à l'une des deux extrémités libres du tronçon central, comme représenté sur la figure 1. Ainsi, la cuve 2 peut être fermée à ses deux extrémités libres, ce qui peut permettre d'obtenir une cuve 2 présentant une enveloppe fermée, complètement hermétique.

On décrit ci-dessous, un procédé de fabrication de la cuve 2. Dans ce qui suit, ce procédé de fabrication est décrit pour une application préférée, à savoir pour une cuve 2 comportant deux dômes 5A et 5B. Cependant, ce procédé peut s'appliquer de manière similaire à une cuve 2 comportant un seul dôme 5.

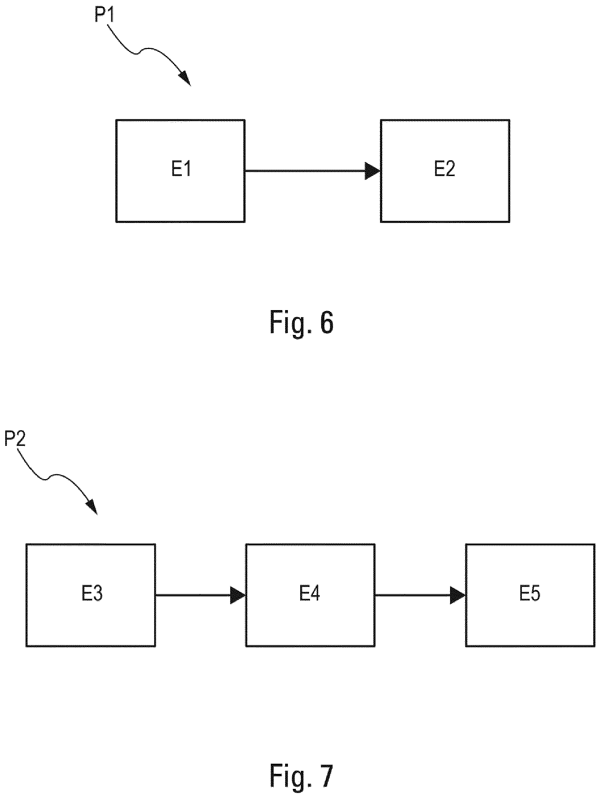

Ce procédé P1 de fabrication comporte, comme représenté schématiquement sur la figure 6, les étapes successives suivantes :
- une étape d'assemblage E1 ; et
- une étape de soudage E2.

L'étape de fabrication E1 consiste à mettre en position les extrémités ouvertes 6 des deux dômes 5 sur les extrémités libres 4 du tronçon central 3 de sorte que les éléments de liaison 7 et 9 forment une languette saillante 10A, 10B, 10C, à chacune des deux extrémités de la cuve 2. De plus, elle consiste à maintenir en position le tronçon central 3 et les deux dômes 5 depuis l'extérieur de la cuve 2, en utilisant un outillage adapté permettant de maintenir stable l'assemblage pour pouvoir réaliser le soudage des deux languettes saillantes 10A, 10B, 10C.

L'étape de soudage E2 consiste à souder les éléments de liaison 7 et 9 (formant les languettes saillantes 10A, 10B, 10C) entre eux, au niveau des extrémités saillantes 8, de manière à former, à chaque fois, un cordon de soudure 13. Ce cordon de soudure 13 correspond, comme indiqué ci-dessus, au seul lien de fixation entre les éléments de liaison 7 et 9 et au seul lien de fixation du dôme 5 correspondant sur le tronçon central 3.

Au cours de son utilisation, il peut arriver que l'on ait besoin d'ouvrir la cuve 2, en particulier pour effectuer des opérations à l'intérieur de ladite cuve 2, par exemple des opérations maintenance ou de dépannage sur l'un ou plusieurs des différents systèmes S. Dans une telle situation, la cuve 2 est ouverte au moins à l'une de ses extrémités, puis réassemblée une fois ces opérations terminées.

On décrit ci-dessous, un procédé de maintenance de la cuve 2 permettant de réaliser de telles opérations de maintenance ou de dépannage.

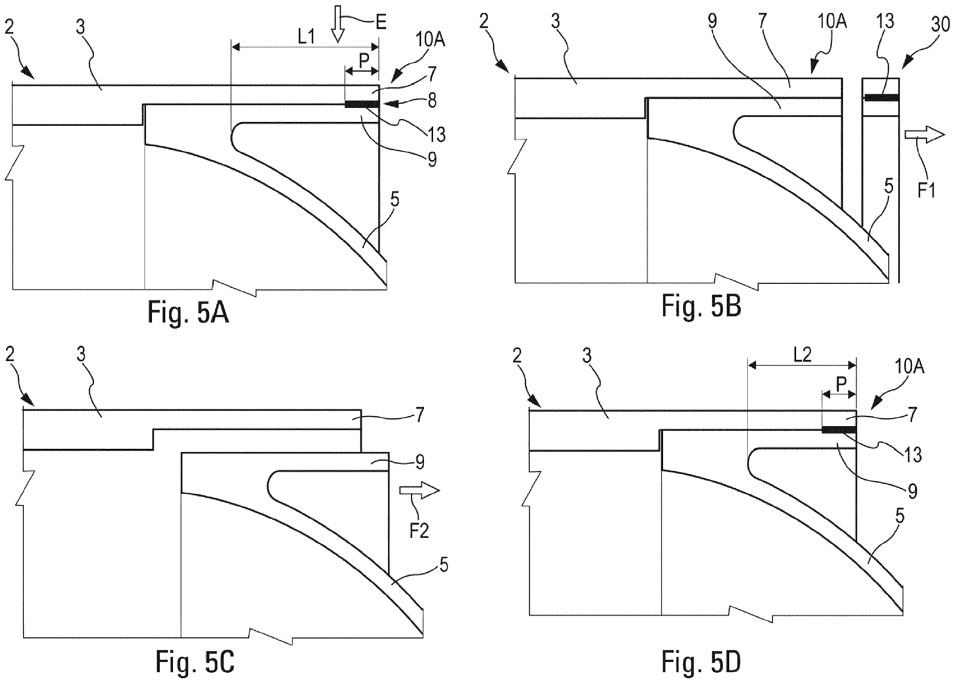

Ce procédé P2 de maintenance comporte, comme représenté schématiquement sur la figure 7, les étapes successives suivantes, illustrées sur les figures 5A à 5D :
- une étape de découpe E3 ;
- une étape de dépose E4 ; et
- une étape de remontage E5.Les étapes de découpe E3 et de dépose E4 correspondent aux étapes permettant l'ouverture de la cuve 2 à l'une des extrémités libres 4, comme représenté schématiquement sur les figures 5A, 5B et 5C.

L'étape de découpe E3 consiste à découper au moins l'extrémité saillante 8 soudée de la languette saillante 10A qui présente une longueur L1, à l'aide d'un outil de découpe usuel, comme illustré par une flèche E sur la figure 5A. Une telle découpe permet de désolidariser une partie 30 (d'extrémité de la languette saillante 10A, pourvue du cordon de soudure 13) du reste de la languette saillante 10A.

Une fois la découpe réalisée, on est apte à séparer de la cuve 2 cette partie 30 découpée, comme illustré par une flèche F1 sur la figure 5B, le seul lien de fixation entre le dôme 5 et corps central 3 étant ainsi supprimé.

L'étape de dépose E4 consiste à déposer le dôme 5 (qui n'y est plus fixé) du corps central 3, comme illustré par une flèche F2 sur la figure 5C.

Lorsque le dôme 5 est complètement enlevé du corps central 3, il est possible d'accéder à l'intérieur de la cuve 2 pour y réaliser les opérations requises.

Une fois ces opérations réalisées, la cuve 2 peut être réassemblée en soudant à nouveau le dôme 5 au tronçon central 3.

L'étape de remontage E5 consiste à remettre en position le dôme 5 sur le tronçon central 3 de manière à reformer la languette saillante 10A, 10B, 10C. Cette languette saillante 10A, 10B, 10C ainsi reformée présente une longueur diminuée L2 correspondant à sa longueur initiale L1 moins la longueur de ladite partie 30.

Plus précisément, la longueur L2 est sensiblement égale à la longueur L1, moins une distance légèrement supérieure à la profondeur P. Pour être sûr d'enlever tout le cordon de soudure 13 lors de la découpe, la partie 30 a en effet une longueur légèrement supérieure à la profondeur P du cordon de soudure 13.

L'étape de remontage E5 consiste ensuite à souder entre eux le dôme 5 et le tronçon central 3 au niveau de l'extrémité saillante 8 de ladite languette saillante 10A, 10B, 10C en réalisant le cordon de soudure 13, comme illustré sur la figure 5D. Ce cordon de soudure 13 présente notamment une profondeur P inférieure à la longueur L2 de la languette saillante 10A, 10B, 10C. Ceci permettra, si besoin et si la longueur L2 est suffisante, de mettre une nouvelle fois en œuvre le procédé P2 ultérieurement.

Concernant le réassemblage de la cuve 2, il peut être nécessaire de rectifier les surfaces ayant été dégradées lors de la découpe de la languette saillante 10A. Cette rectification permet d'obtenir une nouvelle surface pour l'extrémité saillante 8 destinée à être soudée, notamment une surface propre et apte à être soudée.

La cuve 2 ainsi réassemblée peut de nouveau être utilisée, de façon usuelle, dans le cadre de l'application considérée.

La cuve 2, telle que décrite ci-dessus, présente ainsi de nombreux avantages.

En particulier, on dispose d'une cuve 2 pourvue d'une partie destinée à être soudée, à savoir la languette saillante 10A, 10B, 10C, qui est située à l'extérieur de ladite cuve 2. Par conséquent, la languette saillante 10A, 10B, 10C est accessible depuis l'extérieur de la cuve 2, ce qui permet de fabriquer la cuve 2 sans avoir à agir à l'intérieur de celle-ci.

En effet, d'une part, la languette saillante 10A, 10B, 10C présente des surfaces aptes à être utilisées pour le maintien en position du tronçon central 3 et du dôme 5 lorsqu'ils sont assemblés. D'autre part, l'extrémité saillante 8 de la languette saillante 10A, 10B, 10C est facilement accessible, ce qui permet de mettre en œuvre aisément un procédé de soudage. De plus, une fois les opérations de fabrication terminées, les outillages peuvent être retirés sans contrainte puisqu'ils sont exclusivement positionnés à l'extérieur de la cuve 2.

Par ailleurs, la languette saillante 10A, 10B, 10C présente une longueur L telle qu'il est possible d'ouvrir la cuve 2 en agissant uniquement sur ladite languette saillante 10A, 10B, 10C. En effet, en découpant l'extrémité saillante 8 soudée, on est en mesure de désolidariser facilement le tronçon central 3 et le dôme 5. La cuve 2 peut donc être ouverte sans risquer de polluer l'intérieur avec, par exemple, des copeaux de découpe.

En outre, la languette saillante 10A, 10B, 10C n'étant pas découpée entièrement lors d'une ouverture, il est possible de souder à nouveau le tronçon central 3 et le dôme 5 ensemble, en utilisant la longueur restante de la languette saillante 10A, 10B, 10C. La cuve 2 peut donc être ouverte puis réassemblée plusieurs fois, et ce en diminuant la longueur de la languette saillante 10A, 10B, 10C et non pas la longueur totale de ladite cuve 2.

La cuve 2, telle que décrite ci-dessus, est destinée à être intégrée dans un réservoir 1 pour hydrogène liquide. Dans un mode de réalisation préféré, représenté sur la figure 1, le réservoir 1 comporte deux cuves 2 de ce type, correspondant respectivement à la cuve externe (identifiée par la référence 2A) et la cuve interne (identifiée par la référence 2B). La cuve interne 2B est agencée à l'intérieur de la cuve externe 2A. Dans ce mode de réalisation préféré, la cuve externe 2A peut notamment servir d'enceinte protectrice et isolante, tandis que la cuve interne 2B peut notamment servir de conteneur pour l'hydrogène liquide. Le réservoir 1 comporte également l'ensemble de systèmes S.

## Revendications

1. Procédé de maintenance d'une cuve, en particulier pour un réservoir à hydrogène liquide, ladite cuve (2) comportant au moins un tronçon central (3) pourvu d'au moins une extrémité (4) dite libre et au moins un dôme (5) pourvu d'une extrémité (6) dite ouverte agencée sur l'extrémité libre (4) du tronçon central (3), l'extrémité libre (4) du tronçon central (3) comprenant un premier élément de liaison (7), l'extrémité ouverte (6) du dôme (5) comprenant, sur une face externe (26) du dôme (5), un second élément de liaison (9), et ledit premier élément de liaison (7) et ledit second élément de liaison (9) étant configurés pour former une languette saillante (10A, 10B, 10C) s'étendant vers l'extérieur de la cuve (2) et étant soudée à une extrémité saillante (8) par un cordon de soudure (13),
**caractérisé en ce qu'**il comporte au moins les étapes suivantes :
- une étape de découpe (E3) consistant à découper une partie (30) de la languette saillante (10A, 10B, 10C) présentant une longueur initiale (L1), ladite partie (30) découpée correspondant au moins à l'extrémité saillante (8) soudée de ladite languette saillante (10A, 10B, 10C) comportant le cordon de soudure (13), et ladite partie (30) découpée présentant une longueur supérieure à une profondeur (P) dudit cordon de soudure (13) ; et
- une étape de dépose (E4) consistant à ouvrir la cuve (2) comportant au moins le dôme (5) et le tronçon central (3), en séparant au moins ledit dôme (5) dudit tronçon central (3) qui ne sont plus fixés l'un à l'autre, permettant un accès à la cuve (2) afin de réaliser des opérations de maintenance.

2. Procédé selon la revendication 1,
**caractérisé en ce qu'**il comporte, de plus, une étape de remontage (E5) consistant à remettre en position le dôme (5) sur le tronçon central (3) de manière à reformer la languette saillante (10A, 10B, 10C), ladite languette saillante (10A, 10B, 10C) présentant une longueur diminuée (L2) correspondant à sa longueur initiale (L1) moins la longueur de ladite partie (30) découpée, et à souder entre eux le dôme (5) et le tronçon central (3) au niveau de l'extrémité saillante (8) de ladite languette saillante (10A, 10B, 10C) en réalisant un cordon de soudure (13) présentant une profondeur (P) inférieure à la longueur diminuée (L2) de la languette saillante (10A, 10B, 10C).

## Patentansprüche

1. Verfahren zur Wartung eines Behälters, insbesondere für einen Flüssigwasserstofftank, wobei der Behälter (2) mindestens einen Mittelabschnitt (3), der mit mindestens einem sogenannten freien Ende (4) versehen ist, und mindestens eine Kuppel (5) aufweist, die mit einem sogenannten offenen Ende (6) versehen ist, das auf dem freien Ende (4) des Mittelabschnitts (3) angeordnet ist, wobei das freie Ende (4) des Mittelabschnitts (3) ein erstes Verbindungselement (7) umfasst, wobei das offene Ende (6) der Kuppel (5) an einer Außenseite (26) der Kuppel (5) ein zweites Verbindungselement (9) umfasst, und wobei das erste Verbindungselement (7) und das zweite Verbindungselement (9) dazu konfiguriert sind, eine vorspringende Zunge (10A, 10B, 10C) zu bilden, die sich von dem Behälter (2) nach außen erstreckt und mit einem vorspringenden Ende (8) durch eine Schweißnaht (13) verschweißt ist,
**dadurch gekennzeichnet, dass** es mindestens die folgenden Schritte umfasst:
- einen Schritt des Schneidens (E3), bestehend aus dem Schneiden eines Teils (30) der vorspringenden Zunge (10A, 10B, 10C), die eine anfängliche Länge (L1) aufweist, wobei der geschnittene Teil (30) mindestens dem geschweißten vorspringenden Ende (8) der vorspringenden Zunge (10A, 10B, 10C) entspricht, das die Schweißnaht (13) aufweist, und der geschnittene Teil (30) eine Länge aufweist, die größer als eine Tiefe (P) der Schweißnaht (13) ist; und
- einen Schritt des Auftragens (E4), bestehend aus dem Öffnen des Behälters (2), der mindestens die Kuppel (5) und den Mittelabschnitt (3) umfasst, wobei mindestens die Kuppel (5) von dem Mittelabschnitt (3) getrennt wird, die nicht mehr aneinander befestigt sind, wodurch ein Zugang zum Behälter (2) ermöglicht wird, um Wartungsvorgänge auszuführen.

2. Verfahren nach Anspruch 1,
**dadurch gekennzeichnet, dass** es weiter einen Schritt der Remontage (E5) umfasst, bestehend aus dem Wiedereinsetzen der Kuppel (5) auf dem Mittelabschnitt (3), um die vorspringende Zunge (10A, 10B, 10C) neu zu formen, wobei die vorspringende Zunge (10A, 10B, 10C) eine verringerte Länge (L2) aufweist, die ihrer ursprünglichen Länge (L1) abzüglich der Länge des ausgeschnittenen Teils (30) entspricht, und die Kuppel (5) und den Mittelabschnitt (3) im Bereich des vorspringenden Endes (8) der vorspringenden Zunge (10A, 10B, 10C) miteinander zu verschweißen, indem eine Schweißnaht (13) ausgeführt wird, die eine Tiefe (P) aufweist, die geringer ist als die verringerte Länge (L2) der vorspringenden Zunge (10A, 10B, 10C).

## Claims

1. A method for maintaining a tank, in particular for a liquid hydrogen reservoir, said tank (2) having at least one central portion (3) provided with at least one end (4) referred to as free end and at least one dome (5) provided with an end (6) referred to as open end arranged on the free end (4) of the central portion (3), the free end (4) of the central portion (3) comprising a first connecting element (7), the open end (6) of the dome (5) comprising, on an outer face (26) of the dome (5), a second connecting element (9), and said first connecting element (7) and said second connecting element (9) being configured to form a protruding tab (10A, 10B, 10C) extending toward the outside of the tank (2) and being welded at a protruding end (8) by a weld bead (13), wherein the method has at least the following steps:
- a cutting-out step (E3), consisting in cutting out a part (30) of the protruding tab (10A, 10B, 10C) having an initial length (L1), said cut-out part (30) corresponding at least to the welded protruding end (8) of said protruding tab (10A, 10B, 10C) having the weld bead (13), and said cut-out part (30) having a length which is greater than a depth (P) of said weld bead (13); and
- a removing step (E4), consisting in opening the tank (2) having at least the dome (5) and the central portion (3) by separating at least said dome (5) from said central portion (3), which are no longer fixed to one another, allowing access to the tank (2) in order to carry out maintenance operations.

2. The method as claimed in claim 1,
wherein it moreover has a remounting step (E5) consisting in repositioning the dome (5) on the central portion (3) so as to reform the protruding tab (10A, 10B, 10C), said protruding tab (10A, 10B, 10C) having a reduced length (L2) corresponding to its initial length (L1) minus the length of said cut-out part (30), and in welding the dome (5) and the central portion (3) to one another at the protruding end (8) of said protruding tab (10A,10B, 10C) by forming a weld bead (13) having a depth (P) which is less than the reduced length (L2) of the protruding tab (10A, 10B, 10C).
